# EUROPÄISCHE PATENTSCHRIFT

(11) **EP 1 230 490 B1**
(45) Veröffentlichungstag und Bekanntmachung des Hinweises auf die Patenterteilung: **25.02.2004**
(21) Anmeldenummer: 00971330.6
(22) Anmeldetag: 06.10.2000
(51) Int. Cl.: F16B 37/04, F16B 5/02

(54) **BEFESTIGUNGSELEMENT ZUM LÖSBAREN VERBINDEN VON RECHTWINKLIG ZUEINANDER ANGEORDNETEN BLECHPLATTEN**
FIXING ELEMENT FOR DETACHABLY CONNECTING SHEET METAL PLATES THAT ARE ARRANGED IN A RECTANGULAR MANNER IN RELATION TO EACH OTHER
ELEMENT DE FIXATION PERMETTANT LA CONNEXION AMOVIBLE DE PLAQUES DE TOLE DISPOSEES DE FA ON ORTHOGONALE LES UNES PAR RAPPORT AUX AUTRES

(30) Priorität: 27.10.1999 DE 19951742
(43) Veröffentlichungstag der Anmeldung: 14.08.2002
(73) Patentinhaber: A. Raymond & Cie, F-38028 Grenoble-Cédex (FR)
(72) Erfinder: TRESORIER, Jean-François, F-38170 Seyssinet-Pariset (FR)
(74) Vertreter: Kirchgaesser, Johannes, Dipl.-Ing.
(86) Internationale Anmeldenummer: PCT/EP2000/009800
(87) Internationale Veröffentlichungsnummer: WO 2001/031208

(56) Entgegenhaltungen:
- US-A- 2 571 394
- US-A- 3 110 372
- US-A- 3 967 432
- US-A- 4 753 561

## Beschreibung

Die Erfindung betrifft ein Befestigungselement zum lösbaren-Verbinden von rechtwinklig zueinander angeordneten Blechplatten, wobei das Befestigungselement aus einem Aufnahmeteil mit einem Gewinde zum Eindrehen einer Schraube besteht und in eine rechteckige Aussparung unterhalb der Kante der Blechplatte von der Seite her eindrückbar und mittels elastisch zusammendrückbarer Federelemente verrastbar ist.

Ein solches Befestigungselement ist beispielsweise aus US 3.967.432 bekannt. Das mit einem Gewinde versehene Aufnahmeteil ist hierbei aus Plastikmaterial hergestellt und besitzt an seiner Außenwand eine parallel zur Gewindeachse verlaufende Rille in der Breite der Blechdicke und auf der gegenüberliegenden Seite eine parallel dazu verlaufende zweite Rille mit einer Anlagewand und einer elastisch zusammendrückbaren Zunge, deren gegen die Anlagewand gerichtete Kante nach dem Einschwenken in die Aussparung zum Verrasten des Aufnahmeteils hinter der Blechkante dient.

Aus **US-A-3110 372** ist ein weiteres Befestigungselement dieser Art bekannt, bei dem das Aufnahmeteil aus einer rechteckigen Gewindeplatte aus Metallblech mit an zwei gegenüberliegenden Seiten entsprechend der Breite der Aussparung rechtwinklig angesetzten, elastisch zusammendrückbaren Federschenkeln gebildet ist. Diese sind ihrerseits über einen Quersteg U - förmig miteinander verbunden und mit diesem Quersteg an der in Einführrichtung hinteren Seite der Gewindeplatte etwa rechtwinklig angeformt.

Dieses Befestigungselement läßt sich zwar wesentlich kostengünstiger herstellen als das vorgenannte Kunststoffteil. Doch wird es nach dem Eindrücken in die Aussparung aufgrund der üblichen Toleranzabweichungen in der Aussparung sowohl in Richtung auf die Federlappen als auch auf die Gewindeplatte Spiel geben, so daß das Gewinde in der Aussparung mehr oder weniger verschiebbar gehalten wird.

Aufgabe der Erfindung ist es, das vorliegende Befestigungselement aus Metallblech so zu gestalten, daß es auch unter Berücksichtigung von Toleranzabweichungen spielfrei in die Aussparung eingesetzt werden kann. Diese Aufgabe wird durch die im Anspruch 1 angegebene Ausbildung der Federlappen und dem angegebenen Winkel zwischen Gewindeplatte und Quersteg so gelöst, daß die Toleranzen in beiden Richtungen voll ausgeglichen werden und das Befestigungselement absolut spielfrei gehalten wird.

Zwar ist die Ausbildung der Einrastmittel durch nach außen gebogene Federlappen mit Kanten grundsätzlich bereits aus **US - A - 2 571 394** bekannt, doch nicht in Verbindung mit der nach der Erfindung angewinkelten Gewindeplatte.

Weitere Merkmale der Erfindung ergeben sich aus den Unteransprüchen und der Erläuterung der Erfindung anhand eines in der Zeichnung dargestellten Ausführungsbespiels. Es zeigt:
- Fig.1: das Befestigungselement im Schnitt nach Linie I -l in Figur 2,
- Fig. 2: das gleiche Befestigungselement in Vorderansicht,
- Fig. 3: das gleiche Befestigungselement in Draufsicht,
- Fig. 4: das in der Aussparung einer Blechplatte eingesetzte Befestigungselement im Schnitt wie in Figur 1 mit querliegender Gegenplatte,
- Fig. 5: das Befestigungselement in Draufsicht vor dem Einsetzen in die Aussparung,
- Fig. 6: das gleiche Befestigungselement nach dem Einsetzen in die Aussparung und
- Fig. 7: eine explodierte, perspekfivische Darstellung von Blechplatte mit Aussparung, Befestigungselement und rechtwinklig ausgerichteter Gegenplatte mit Schraube.

Das in den Figuren dargestellte Befestigungselement besteht aus einer rechteckigen Gewindeplatte **1** mit an zwei gegenüberliegenden Seiten rechtwinklig angesetzten Federschenkeln **2**, die über einen Quersteg **3** u-förmig miteinander verbunden sind, wobei dieser Quersteg **3** an der Gewindeplatte **1** etwa rechtwinklig angeformt ist.

An der Gewindeplatte **1** ist eine Gewindehülse **4** angeformt, welche zwischen die Federschenkel **2** gerichtet und aus der Gewindeplatte **1** durch Tiefziehen herausgearbeitet ist. Auf der vom Quersteg **3** gegenüberliegenden Seite weist die Gewindeplatte **1** einen schrägen Einführlappen **5** auf, welcher unmittelbar hinter dem Rand der Gewindehülse **4** zum Quersteg **3** hin abgeknickt ist. Desgleichen weisen die Federschenkel **2** an ihren freien Enden ebenfalls Einführlappen **6** auf, die von den Federschenkeln **2** schräg aufeinander zu gerichtet sind.

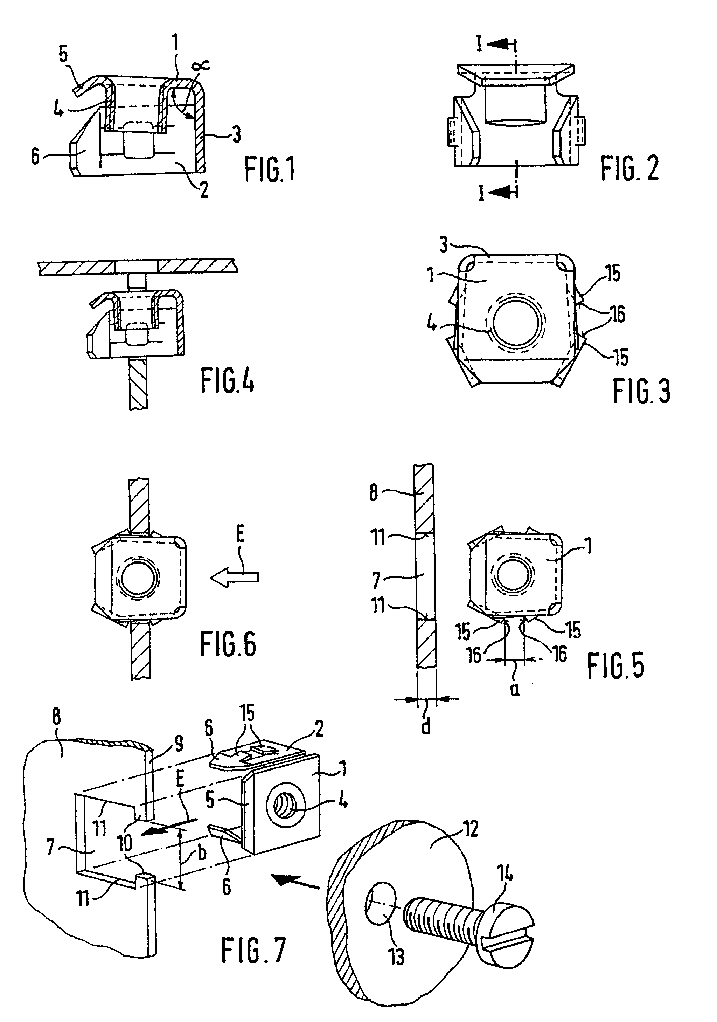

Wie aus **Figur 7** ersichtlich, wird das Befestigungselement von der Seite her in Richtung des Pfeiles **"E"** in die rechteckige Aussparung **7** einer Blechplatte **8** eingedrückt. Die nach außen weisende Kante **9** der Blechplatte **8** ist hierbei mit zwei nach innen gerichteten Vorsprüngen **10** versehen, welche die Seitenkanten **11** der Aussparung **7** nach außen hin abschließen. Vor der Aussparung **7** ist die dazu querliegende Gegenplatte **12** dargestellt, die ein Durchgangsloch **13** zum Durchführen einer Schraube **14** besitzt.

Der Abstand **b** zwischen den Vorsprüngen **10** ist zweckmäßigerweise so bemessen, daß eine Anlage der Gewindeplatte **1** bis an die Gewindehülse 4 gewährleistet ist und nur soviel Platz frei bleibt, daß die Schraube **14** zwischen den Vorsprüngen **10** hindurchgedreht werden kann.

Um das Befestigungselement nach dem Eindrücken in die Aussparung 7 mit der Gewindehülse **4** mittig zur Blechplatte **8** sicher positionieren und verrasten zu können, weist jeder Federschenkel **2** zwei symmetrisch zur Gewindeachse schräg nach außen gebogene Federlappen **15** mit aufeinander zu gerichtete Kanten **16** auf. Diese haben voneinander einen Abstand **a**, der mindestens gleich der Dicke **d** der Blechplatte **8** ist. Außerdem sind die Federschenkel **2** am Quersteg **3** so angeformt, daß die Kanten **16** der Federlappen **15** über die Gewindeplatte **1** hinausragen.

Die Funktion dieser Federlappen ist aus **Figuren 5 und 6** leicht erkennbar. In **Fi gur 5** befindet sich das Befestigungselement vor der Aussparung **7**, die von den beiden Seitenkanten **11** begrenzt ist. Beim Eindrücken des Befestigungselementes in Richtung des Pfeiles **E** federn die beiden Federschenkel **2** soweit zusammen, bis die Kanten **16** der Federlappen **15** die Blechkanten **11** passiert haben und durch die Rückstellkraft der Federschenkel **2** wieder nach außen federn. Nun sind die Seitenkanten **11** der Aussparung **7** zwischen den Kanten **16** der Federlappen **15** eingeklemmt. Gleichzeitig wird die unter einem Winkel α > **90°** am Quersteg **3** angeformte Gewindeplatte **1** von den Vorsprüngen **10** etwas zusammengedrückt, so daß das Befestigungselement spielfrei in der Aussparung **7** eingeklemmt ist.

### Bezugszeichenliste

- 1: Gewindeplatte
- 2: Federschenkel
- 3: Quersteg
- 4: Gewindehülse
- 5: Einführlappen
- 6: Einführlappen
- 7: Aussparung
- 8: Blechplatte
- 9: Außenkante
- 10: Vorsprünge
- 11: Seitenkanten ( der Aussparung )
- 12: Gegenplatte
- 13: Durchgangsloch
- 14: Schraube
- 15: Federlappen
- 16: Kanten

## Patentansprüche

1. Befestigungselement zum lösbaren Verbinden von rechtwinklig zueinander angeordneten Blechplatten, bestehend aus einem Aufnahmeteil mit einem Gewinde zum Eindrehen einer Schraube, welches in eine rechteckige Aussparung unterhalb der Kante der Blechplatte von der Seite her eindrückbar und verrastbar ist, wobei das Aufnahmeteil aus einer rechteckigen Gewindeplatte ( 1 ) aus Metallblech mit an zwei gegenüberliegenden Seiten entsprechend der Breite der Aussparung ( 7 ) rechtwinklig angesetzten, elastisch zusammendrückbaren Federschenkeln ( 2 ) gebildet ist, die über einen Quersteg ( 3 ) U-förmig miteinander verbunden und mit diesem an der in Einführrichtung hinteren Seite der Gewindeplatte ( 1 ) etwa rechtwinklig angeformt sind, **dadurch gekennzeichnet, daß** jeder Schenkel ( 2 ) zwei symmetrisch zur Gewindeachse schräg nach außen gebogene Federlappen ( 15 ) aufweist, deren aufeinander zu gerichtete Kanten ( 16 ) einen Abstand ( a ) voneinander haben, der mindestens gleich der Dicke ( d ) der Blechplatte ( 8 ) ist, und daß die Gewindeplatte ( 1 ) zum Quersteg ( 3 ) einen Winkel α bildet, der etwas größer ist als 90°.

2. Befestigungselement nach Anspruch 1, **dadurch gekennzeichnet, daß** die Kanten ( 16 ) der Federlappen ( 15 ) über die Gewindeplatte ( 1 ) hinausragen.

## Claims

1. Fastening element for releasable connection of metal sheets arranged at right-angles to one another, composed of a receiving portion with a thread into which a screw can be screwed, that can be pushed sideways into and latched into a rectangular cut-out below the edge of the metal sheet, wherein the receiving portion is formed by a rectangular screw plate (1) of sheet metal with two elastically compressible spring legs (2) fixed at right-angles onto two opposite sides corresponding to the width of the cut-out (7), that are joined together in a U-shape by means of a cross-member (3) and are formed therewith approximately at right angles onto the side of the screw plate (1) that is at the rear in the direction of insertion, **characterised in that** each leg (2) is provided with two spring tabs (15) angled diagonally outwards, symmetrical to the thread axis, the edges (16) of which tabs that face one another are at a distance (a) apart that is at least equal to the thickness (d) of the metal sheet (8), and **in that** the screw plate (1) forms an angle α to the cross-member (3) that is somewhat greater than 90°.

2. Fastening element according to claim 1, **characterised in that** the edges (16) of the spring tabs (15) protrude beyond the screw plate (1).

## Revendications

1. Organe de fixation pour l'assemblage, avec possibilité de démontage ultérieur, de plaques en tôle respectivement agencées suivant une disposition en angle droit, se composant d'un élément de réception muni d'un filetage pour le vissage d'une vis, qui est prévu pour être, depuis le côté, enfoncé et emmanché en prise d'encastrement dans un évidement rectangulaire sous le bord de la plaque en tôle, l'élément de réception se composant en l'occurrence d'une plaque rectangulaire formant filetage (1) réalisée à partir d'une feuille de métal comportant, sur deux de ses côtés opposés deux pattes élastiques (2), disposées en angle droit suivant la largeur de l'évidement (7) susceptibles d'être rapprochées par cédage élastique l'une de l'autre par l'application d'un effort de serrage bilatéral, qui sont reliées ensemble selon une disposition en U par une barrette entretoise transversale (3) et qui sont réalisées solidaires de celle-ci par formage du côté arrière dans le sens de l'introduction, de la plaque formant filetage (1) suivant une disposition sensiblement en angle droit, **caractérisé en ce que** chaque patte (2) comporte deux languettes élastiques (15) repliées obliquement vers l'extérieur de manière symétrique par rapport à l'axe du filetage, dont les arêtes (16) orientées l'une vers l'autre sont respectivement séparées par un intervalle d'écartement (a) qui correspond au moins à l'épaisseur (d) de la plaque en tôle (8) et **en ce que** la plaque formant filetage (1) forme avec la barrette entretoise transversale (3) un angle qui est légèrement supérieur à 90°.

2. Organe de fixation selon la revendication 1, **caractérisé en ce que** les arêtes (16) des languettes élastiques (15) font saillie au-dessus de la plaque formant filetage (1).
